# FASCICULE DE BREVET EUROPEEN

(11) **EP 1 392 613 B1**
(45) Date de publication et mention de la délivrance du brevet: **10.08.2005**
(21) Numéro de dépôt: 02738273.8
(22) Date de dépôt: 17.05.2002
(51) Int. Cl.: C03C 17/00, C03C 17/42

(54) **PROCEDE DE PREPARATION D'UN VERRE APTE AU DEBORDAGE, VERRE AINSI OBTENU ET PROCEDE DE DEBORDAGE D'UN TEL VERRE**
VERFAHREN ZUR HERSTELLUNG VON RANDBEARBEITUNGFÄHIGEM GLAS, HERGESTELLTES GLAS UND VERFAHREN ZUR RANDBEARBEITUNG VON EINEM SOLCHEN GLAS
METHOD FOR PREPARING AN OPTICAL GLASS FOR EDGE GRINDING, RESULTING GLASS AND METHOD FOR EDGE GRINDING SUCH A GLASS

(30) Priorité: 17.05.2001 FR 0106534
(43) Date de publication de la demande: 03.03.2004
(73) Titulaire: ESSILOR INTERNATIONAL COMPAGNIE GENERALE D'OPTIQUE, 94227 Charenton cédex (FR)
(72) Inventeur: LACAN, Pascale, F-75011 Paris (FR); CONTE, Dominique, F-52100 Saint-Dizier (FR)
(74) Mandataire: Catherine, Alain
(86) Numéro de dépôt international: PCT/FR2002/001688
(87) Numéro de publication internationale: WO 2002/092524

(56) Documents cités:
- WO-A-01/02496
- US-A- 2 392 768

## Description

La présente invention se rapporte au domaine du débordage des verres, tout particulièrement des verres ophtalmiques.

Un verre ophtalmique résulte d'une succession d'opérations de moulage et/ou de surfaçage / polissage qui déterminent la géométrie des deux surfaces optiques convexe et concave dudit verre, puis de traitements de surface appropriés.

La dernière étape de finition d'un verre ophtalmique est l'opération de débordage qui consiste à usiner la tranche ou périphérie du verre de façon à la conformer aux dimensions requises pour adapter le verre à la monture de lunette dans laquelle il est destiné à prendre place.

Le débordage est réalisé généralement sur une meuleuse comprenant des meules diamantées qui effectuent l'usinage tel que défini ci-dessus.

Le verre est maintenu, lors de cette opération, par des organes de blocage intervenant axialement.

Le mouvement relatif du verre par rapport à la meule est contrôlé, généralement numériquement, afin de réaliser la forme souhaitée.

Comme cela apparaît, il est tout à fait impératif que le verre soit fermement maintenu lors de ce mouvement.

Pour cela, avant l'opération de débordage, on effectue une opération de glantage du verre, c'est à dire que l'on vient positionner sur la surface convexe du verre un moyen de maintien ou gland.

Un patin de maintien, tel qu'une pastille autocollante, par exemple un adhésif double face, est disposé entre le gland et la surface convexe du verre.

Le verre ainsi équipé est positionné sur l'un des organes axiaux de blocage précités, le second organe de blocage axial venant alors serrer le verre sur sa face concave par l'intermédiaire d'une butée, généralement en élastomère.

Lors de l'usinage, un effort de couple tangentiel est généré sur le verre, ce qui peut engendrer une rotation du verre par rapport au gland si le système de maintien du verre n'est pas assez efficace.

Le bon maintien du verre dépend principalement de la bonne adhérence à l'interface patin de maintien/ surface convexe du verre.

Les verres ophtalmiques de dernière génération comportent le plus souvent des revêtements de surface hydrophobes et/ou oléophobes antisalissures associés à des revêtements anti-reflets.

Il s'agit le plus souvent de matériaux de type fluorosilane qui diminuent l'énergie de surface afin d'éviter l'adhérence de souillures grasses qu'il est ainsi plus facile d'éliminer.

Un des problèmes générés par ce type de revêtement de surface est qu'ils atteignent une efficacité telle que l'adhérence à l'interface patin/surface convexe s'en trouve altérée, voire compromise pour les revêtements hydrophobes et/ou oléophobes les plus efficaces.

Il devient donc tout à fait difficile d'effectuer des opérations de débordage satisfaisantes, en particulier pour des verres en polycarbonate dont le débordage génère des efforts beaucoup plus importants que pour les autres matières.

La conséquence d'une opération de débordage mal menée est la perte pure et simple du verre.

L'un des objets de l'invention consiste à fournir un moyen permettant d'effectuer le débordage d'un verre comportant en surface un revêtement hydrophobe et/ou oléophobe, moyen qui puisse s'intégrer dans le processus de fabrication du verre, et soit facile à mettre en oeuvre pour l'opérateur qui réalise l'opération de débordage.

Le problème technique est résolu selon l'invention en déposant sur un verre comportant un revêtement de surface hydrophobe et/ou oléophobe, une couche protectrice temporaire conférant au verre une énergie de surface au moins égale à 15 mJ/m².

Ainsi, il est possible d'obtenir une adhérence suffisante à l'interface patin de maintien/verre, pour des patins classiquement utilisés dans le domaine technique.

Il a déjà été proposé auparavant de déposer des couches temporaires sur des verres ophtalmiques, mais essentiellement dans le but d'assurer leur protection vis-à-vis de rayures et dégradations pouvant survenir lors de leur manipulation. C'est le cas, par exemple, dans la demande de brevet WO00/68326 concernant un procédé de fabrication d'articles optiques composites à partir de pellicules optiques collées, pellicules dont la surface a été préalablement protégée par une couche protectrice qui peut être dissoute par la suite.

C'est aussi le cas dans le brevet US 2,392,768, où on dépose une couche temporaire à base de résine d'urée - formaldéhyde sur le verre avant de procéder aux différentes opérations (débordage, polissage) à effectuer. Cette couche est ensuite enlevée avec de l'eau.

Dans la présente demande, le terme " verre " désigne un substrat en verre organique ou minéral, traité ou non, selon qu'il comporte un ou plusieurs revêtements de nature diverse ou qu'il reste nu.

Lorsque le verre comporte un ou plusieurs revêtement(s) de surface, l'expression " déposer une couche sur le verre " signifie que l'on dépose une couche sur le revêtement extérieur du verre.

Les énergies de surface sont calculées selon la méthode Owens-Wendt décrite dans la référence suivante : " Estimation of the surface force energy of polymers " Owens D.K., Wendt R.G. (1969) J. APPL. POLYM. SCI, 13, 1741-1747.

Les verres traités par le procédé de l'invention sont des verres qui comportent un revêtement de surface hydrophobe et/ou oléophobe et préférentiellement des verres comportant à la fois un revêtement de surface hydrophobe et/ou oléophobe déposé sur un revêtement anti-reflets mono ou multicouche.

En effet, les revêtements hydrophobes et/ou oléophobes sont généralement appliqués sur des verres comportant un revêtement anti-reflets, en particulier en matière minérale, afin de réduire leur tendance marquée à la salissure, par exemple vis à vis des dépôts graisseux.

Comme indiqué précédemment, les revêtements hydrophobes et/ou oléophobes sont obtenus par application, sur la surface du revêtement anti-reflets, de composés diminuant l'énergie de surface du verre.

De tels composés ont été largement décrits dans l'art antérieur, par exemple dans les brevets US-4410563, EP-0203730, EP-749021, EP-844265, EP-933377.

Des composés à base de silanes porteurs de groupements fluorés, en particulier de groupement(s) perfluorocarbone ou perfluoropolyéther, sont le plus souvent utilisés.

A titre d'exemples, on peut citer des composés de silazane, de polysilazane ou de silicone comprenant un ou plusieurs groupements fluorés tels que ceux cités précédemment.

Un procédé connu consiste à déposer sur le revêtement anti-reflets des composés porteurs de groupements fluorés et de groupements Si-R , R représentant un groupe -OH ou un précurseur de celui-ci, préférentiellement un groupe alcoxy. De tels composés peuvent effectuer, à la surface du revêtement anti-reflets, directement ou après hydrolyse, des réactions de polymérisation et/ou réticulation.

L'application des composés diminuant l'énergie de surface du verre est classiquement effectué par trempé dans une solution dudit composé, par centrifugation ou par dépôt en phase vapeur, notamment. Généralement, le revêtement hydrophobe et/ou oléophobe a une épaisseur inférieure à 10 nm, et mieux encore inférieure à 5 nm.

L'invention est mise en oeuvre préférentiellement sur des verres comportant un revêtement de surface hydrophobe et/ou oléophobe conférant une énergie de surface inférieure à 14 mJoules/m² et mieux encore inférieure ou égale à 12 mJ/m².

La couche protectrice temporaire va élever l'énergie de surface du verre jusqu'à une valeur d'au moins 15 mJoules/m².

Elle peut être appliquée sur une zone couvrant la totalité d'au moins une des deux faces du verre ou uniquement sur la zone destinée à recevoir le contact du patin de maintien dudit verre.

Plus précisément, il est d'usage de déposer le patin de maintien, associé au gland, sur la face convexe du verre. On peut donc couvrir avec la couche protectrice la totalité de la face convexe ou, alternativement, uniquement une zone centrale de la face convexe, en utilisant un masque ou toute autre technique appropriée.

Le dépôt peut couvrir uniformément la zone correspondante, c'est à dire qu'il présente une structure continue, mais il peut aussi présenter une structure discontinue, par exemple prendre la forme d'une trame.

Dans ce cas, on forme un dépôt intermittent, dont la surface reste suffisante pour permettre l'adhérence requise du patin de maintien.

Les dépôts à structure discontinue peuvent être obtenus par tampographie.

A la suite du dépôt de la couche protectrice temporaire, on obtient un verre apte au débordage.

C'est à dire qu'après débordage selon le procédé de l'invention, le verre présentera les dimensions requises pour convenablement s'insérer dans la monture qui lui est destinée.

Plus précisément, ce résultat est obtenu lorsque le verre, lors de l'opération de débordage, subit un désaxage maximum de 2°.

Une aptitude au débordage optimale correspond à un verre dont le désaxage est inférieur ou égal à 1°.

La couche protectrice est constituée de tout matériau permettant d'élever l'énergie de surface du verre à propriétés hydrophobe et/ou oléophobe et susceptible d'être éliminée lors d'une opération ultérieure subséquente à l'étape de débordage.

Bien évidemment, le matériau doit être tel qu'il n'altère pas définitivement les propriétés de surface du revêtement hydrophobe et/ou oléophobe et qu'après l'élimination de celui-ci , les propriétés optiques et de surface du verre sont globalement identiques à celles que le verre possédait avant le dépôt de la couche protectrice.

Préférentiellement, la couche protectrice temporaire est une couche minérale, et particulièrement un fluorure ou un mélange de fluorures métalliques, un oxyde ou un mélange d'oxydes métalliques.

Comme exemple de fluorures, on peut citer le fluorure de magnésium MgF₂, de lanthane LaF₃, d'aluminium AlF₃ ou de cérium CeF₃.

Des oxydes utilisables sont les oxydes de titane, d'aluminium, de zirconium, ou de praséodyme.

Des mélanges d'alumine et d'oxyde de praséodyme sont recommandés.

Un matériau commercial particulièrement recommandé est le PASO2 de la société Leybold.

La couche protectrice peut être déposée par tout procédé classique convenable.

Généralement, les revêtements anti-reflets, hydrophobe et/ou oléophobe ont été déposés par évaporation, dans des cloches à vide et il est souhaitable de déposer la couche protectrice temporaire par la même technique, ce qui permet d'effectuer l'ensemble des opérations à la suite, sans manipulation excessive des verres entre les étapes.

Lorsqu'elle est constituée d'une matière minérale, l'épaisseur de la couche protectrice est préférentiellement inférieure ou égale à 50 nm, et généralement de 1 à 50 nm, et mieux encore de 5 à 50 nm.

D'une manière générale, si l'épaisseur de la couche protectrice est trop faible, on risque de modifier insuffisamment l'énergie de surface.

Si, au contraire, l'épaisseur de la couche protectrice est trop élevée, en particulier pour les couches essentiellement minérales, les inventeurs ont trouvé qu'il risque d'apparaître des contraintes mécaniques au sein de la couche, ce qui peut être préjudiciable aux propriétés attendues.

De préférence, et tout particulièrement lorsque la couche protectrice temporaire est déposée sur la totalité d'une des faces du verre, le matériau présente un certain degré de transparence permettant d'effectuer sur le verre des mesures classiques de puissance par un frontofocomètre.

Ainsi donc le verre apte au débordage selon l'invention présente de préférence une transmission d'au moins 18 %, de préférence au moins 40% selon la norme ISO8980/3.

En alternative aux matériaux de nature minérale précédemment cités, on peut utiliser des encres classiques pour le marquage des verres ophtalmiques progressifs, et/ou les résines constituant le liant de ces encres.

Dans ce cas, il est possible de déposer des épaisseurs beaucoup plus élevées que dans le cas de couches purement minérales.

Les épaisseurs requises peuvent alors varier de 5 à 150 micromètres.

Des résines de type alkyde sont particulièrement conseillées.

Le verre apte au débordage obtenu selon le procédé de l'invention peut être soumis à une opération de débordage tout à fait classique, excepté qu'il faut effectuer, en étape finale, une opération d'élimination de la couche protectrice temporaire.

L'invention concerne donc également un procédé d'obtention d'un verre débordé à propriété de surface hydrophobe et/ou oléophobe, caractérisé en ce qu'il comprend les étapes suivantes :
1) on choisit un verre apte au débordage, selon l'invention,
2) on procède au glantage dudit verre,
3) on déborde ledit verre,
4) on procède au déglantage dudit verre,
5) on récupère le verre ainsi débordé, et
6) on élimine la couche protectrice temporaire pour restituer au verre ses propriétés de surface hydrophobe et/ou oléophobe.

Comme indiqué ci-dessus, l'étape 3) de débordage proprement dite est classique et connue de l'homme de l'art.

Elle ne sera donc pas décrite en détail.

On peut préciser cependant que les patins de maintien utilisés préférentiellement sont des pastilles autocollantes double face, par exemple des adhésifs de marque 3M.

L'étape d'élimination de la couche protectrice temporaire peut être effectuée soit en milieu liquide, soit par essuyage à sec, soit encore par une mise en oeuvre successive de ces deux moyens.

L'étape d'élimination en milieu liquide est de préférence effectué par une solution acide , en particulier une solution d'acide orthophosphorique, à des molarités pouvant varier de 0,01 à 1 N.

La solution acide peut également comprendre des agents tensioactifs, anioniques, cationiques, ou amphotères.

La température à laquelle est menée l'étape d'élimination est variable, mais généralement, on procède à température ambiante.

L'élimination de la couche protectrice temporaire peut également être favorisée par action mécanique, préférentiellement par utilisation d'ultrasons.

En général, après le traitement avec le milieu liquide tel que la solution acide, l'essuyage à sec ou la combinaison des deux, l'étape d'élimination comprend une étape de nettoyage par une solution aqueuse de pH sensiblement égale à 7.

A la fin de l'étape d'élimination de la couche protectrice temporaire, le verre présente des caractéristiques optiques et de surface du même ordre, voire quasiment identiques à celles du verre initial, comportant le revêtement hydrophobe et/ou oléophobe.

Les avantages liés à l'invention sont nombreux.

Le procédé selon l'invention est simple d'utilisation.

En particulier, l'homme du métier peut utiliser meuleuses et procédés de débordage classiques, sans avoir à modifier ceux-ci, ou de façon extrêmement limitée.

L'étape d'élimination de la couche protectrice temporaire est rapide.

Les verres aptes au débordage selon l'invention, en particulier les verres comportant une couche protectrice temporaire en matière minérale, peuvent faire l'objet de marquages au moyen d'encres diverses, communément utilisées par l'homme de l'art, pour les verres progressifs.

### Exemples

Les exemples suivants illustrent la présente invention.

### Exemple 1 :

### 1.1 Préparation de verres comportant un revêtement hydrophobe et oléophobe :

On prépare des verres organiques porteurs de 3 revêtements anti-abrasion, anti-reflets , hydrophobe-oléophobe, déposés dans cet ordre sur le substrat.

Des verres organiques ORMA®, de puissance -2,00 dioptries, obtenus par polymérisation du diallyl carbonate de diéthylène glycol (monomère CR39®) et comportant un revêtement anti-abrasion de type polysiloxane correspondant à l'exemple 3 de la demande de brevet EP-614957 au nom de la demanderesse, sont chauffés à l'étuve pendant 3 heures à une température de 100°C.

Les verres sont ensuite disposés dans une machine de traitement sous vide LEYBOLD 1104 équipée d'un canon à électrons et d'une source d'évaporation à effet Joule.

On crée un vide secondaire par pompage des substrats, sans chauffage de ceux-ci.

On évapore successivement, avec le canon à électrons, 4 couches optiques anti-reflets haut indice(HI)/ bas indice(BI)/HI/BI : ZrO₂, SiO₂, ZrO₂, SiO₂.

On dépose ensuite un revêtement hydrophobe et oléophobe par évaporation d'un produit de marque OPTOOL DSX (composé comprenant des motifs perfluoropropylène) commercialisé par la société DAIKIN.

Le produit, sous forme liquide, est versé dans une capsule en cuivre, puis on laisse sécher le liquide à température ambiante et à pression atmosphérique.

La capsule en cuivre est ensuite placée dans un creuset à effet joule.

L'évaporation du produit est réalisée sous vide secondaire.

L'épaisseur de la couche déposée est inférieure à 10 nm.

Le contrôle de l'épaisseur déposée est effectué par balance à quartz.

### 1.2 Dépôt de la couche protectrice temporaire.

On procède ensuite au dépôt par évaporation de la couche protectrice temporaire :
Un matériau identifié sous le nom de PASO 2, qui est un mélange d'alumine et d'oxyde de praséodyme, commercialisé par la Société Leybold, est évaporé au canon à électrons.
L'évaporation est non réactive (sans oxygène).
L'épaisseur physique de la couche protectrice déposée est de 25 nm.
Le contrôle de l'épaisseur déposée est effectué par balance à quartz.
Le verre est récupéré après réchauffage de l'enceinte, puis remise à l'atmosphère de la chambre de traitement.

### 1.3) Débordage :

Le verre résultant de l'étape 1,2 est soumis à une opération de débordage classique sur une meuleuse gamma de la société Essilor.

On utilise comme patin de maintien une pastille autocollante 3M, de diamètre 25 mm et un gland de la société Essilor de même diamètre.

La meule d'ébauche plastique :polycarbonate présente un diamètre de 155 mm et tourne à 2850 tours/minute.

Lors de l'opération de débordage, le désaxage du verre est inférieur à 1 °.

A ce stade les verres débordés récupérés peuvent être directement placés dans la monture qui leur est destinée, puis traités selon l'étape1.4 suivante, ou traités selon l'étape 1.4 avant d'être insérés dans la monture.

### 1.4) Elimination de la couche protectrice.

On utilise pour cette étape une petite cuve à ultra sons modèle : B2200 E2 BRANSON

Puissance ultra sons : 60 watts

Fréquence ultra sons : 47 kHz / - 6 kHz

Les verres obtenus lors de l'étape 1,3 sont plongés dans une solution d'acide orthophosphorique dilué à 0,1 N, à température ambiante (avec ultra sons et sans chauffage) pendant une durée de 2 minutes, puis rincés à l'eau ou à l'alcool isopropylique et essuyés.

Les verres obtenus présentent d'excellentes caractéristiques optiques ainsi que d'excellentes propriétés hydrophobes et oléophobes.

### Exemple2

Les étapes 1.1, 1.2 et 1.4 de l'exemple 1 sont reproduits à l'identique, excepté que ceux-ci sont effectués sur des lames planes, de même matière que les substrats ORMA® CR39 ®.

On mesure les angles de contact aux différentes étapes du procédé.

L'utilisation de lames planes facilite ces mesures.

Les angles de contact ont été mesurés:

Dans une salle climatisée : température ambiante T° = 21° +/-1 °C, taux d'humidité relative Rh = 55% +/- 5%.

Avec un goniomètre Digidrop modèle GBX avec 3 liquides : eau déionisée, glycérol et diiodométhane

Les énergies de surface sont calculées suivant le modèle d'Owens-Wendt 2 composantes par l'appareil DGD/fast 60 de la société GBX Instrumentations scientifique utilisant un logiciel Windrop.

Les résultats obtenus figurent dans le tableau suivant :

**Tableau I**

| | Substrat plan obtenu après l'étape1.1 (substrat initial) | Substrat plan obtenu après l'étape 1.2 (avec couche protectrice temporaire de Paso2) | Substrat plan obtenu après l'étape1.4 (Après élimination de la couche protectrice temporaire de Paso 2) |
|---|---|---|---|
| Angle eau | 118 ° +/- 0,75 | 49° +/- 3,5 | 112° +/- 0,95 |
| Angle glycérol | 105 ° +/- 0,97 | 44° +/- 0,9 | 103° +/- 0,65 |
| Angle diiodométhane | 92 ° +/- 2 | 30° +/- 3,8 | 91° +/- 3,72 |
| | | | |
| Composante polaire | 0,93 mJ/m² | 20,60 mJ/m² | 2,29 mJ/m² |
| Composante dispersive | 10,34 mJ/m² | 31,99 mJ/m² | 9,78 mJ/m² |
| | | | |
| Energie totale (Owens-Wendt) | 11,4 mJ/m² +/- 0,5 | 52,6 mJ/m² +/- 0,8 | 11,7 mJ/m² +/- 0,5 |

On constate qu'avec la couche protectrice temporaire à base de Paso 2, les énergies de surface sont élevées : Des verres ophtalmiques constituée d'un tel matériau sont donc aptes au débordage et autorisent l'utilisation d'un grand choix de pastilles autocollantes ainsi qu'un grand choix d'encres pour le marquage des verres.

Les énergies de surface obtenues après élimination de la couche protectrice de Paso 2 redeviennent pratiquement identiques à celles obtenues pour le verre initial, comportant le revêtement anti-reflets et le revêtement hydrophobe et oléophobe.

Les caractéristiques de surface du revêtement hydrophobe et oléophobe sont conservées.

### Exemple 3

Des verres ORMA ® de puissance optique -2,00 dioptries sont traités selon le procédé de l'exemple 1, étape 1.1, afin d'obtenir des verres à propriétés anti-reflets, hydrophobe et oléophobe.

Ces verres sont ensuite traités par moitié : une moitié selon le protocole décrit dans l'exemple 1 étape 1.2 reçoit une couche protectrice, tandis que l'autre moitié, masquée par un cache métallique, ne reçoit pas de couche protectrice.

La partie du verre revêtue de la couche protectrice est ensuite traitée selon le protocole de l'exemple 1, étape 1.4, par immersion par moitié de l'échantillon, dans le bain d'acide.

Sur chacune des deux parties du verre, on effectue :
- des mesures de réflexion visuelle Rv et de réflexion moyenne Rm selon la norme ISO/WD 8980-4
- des mesures colorimétriques de l'angle de teinte h et de la Chroma C* avec un spectrophotomètre ZEISS (angle 15°) et calculées dans le système CIE lab 1964 (L*, a*, b*).

Les résultats obtenus figurent dans le tableau II ci-dessous.

**Tableau II**

| | Moitié n'ayant pas reçu de dépôt de la couche protectrice | Moitié ayant reçu le dépôt de la couche protectrice, puis élimination de celle-ci |
|---|---|---|
| h | 135° +/- 2° | 135° +/- 2° |
| C* | 7,2 | 7,3 |
| Rv | 0,72 | 0,71 |
| Rm | 0,74 | 0,75 |

Les valeurs colorimétriques obtenues après application de la couche de paso2, puis élimination de celle-ci sont pratiquement identiques à celles de la partie du verre qui n'a pas reçu de couche de Paso 2 : la couche protectrice de Paso 2 et son élimination chimique ne modifient pas les caractéristiques colorimétriques du revêtement anti-reflets.

### Exemple 4 :

Dans cet exemple, on effectue le dépôt d'une couche protectrice temporaire par tampographie. Les dépôts ont été effectués sur des verres de puissance négative -2.00 dioptries en ORMA® identiques à ceux issus de l'étape 1.1 de l'exemple 1.

On utilise une encre référencée sous le n° : 03XH622 2030

Diluant 4909

Fabricant : Tiflex adresse: B.P. 3.01450.PONCIN.FRANCE.

On rajoute 10% de diluant dans la formulation initiale de l'encre pour adapter la viscosité de la solution.

La machine de tampographie utilisée est du type MTHV2

(Fabricant : Automation & Robotics)

Le tampon utilisé est en silicone

Cliché gravé (profondeur 10 à 20µm.) et tramé (taux de remplissage de 20% à 40%)

L'encre est appliquée par tampographie sur le verre.

Le séchage est effectué à l'air ambiant ou dans une étuve à 50°C pendant un temps supérieur ou égal à 5 minutes.

Il en résulte une couche d'encre discontinue (trame), dont l'adhérence sur la surface du verre est suffisante pour ne pas être dégradée lors du transport.

Le débordage du verre ainsi revêtu est alors effectué en plaçant une pastille autocollante double face de 3M sur la couche d'encre.

Les verres obtenus sont aptes au débordage et peuvent être insérés dans des montures après débordage.

Un exemple comparatif est effectué sur un verre ne comportant pas de couche protectrice temporaire.

Le verre subit un fort désaxage durant l'opération de débordage et ne peut être inséré dans la monture correspondante.

Les résultats obtenus figurent dans le tableau III

**Tableau III**

| | **Encre** | **Profondeur cliché** | **trame** | **séchage** | **Aptitude au débordage** |
|---|---|---|---|---|---|
| Ex1 | Tiflex | 10-12µm | 20% | air | oui |
| Ex2 | Tiflex | 10-12µm | 25% | air | oui |
| Ex3 | Tiflex | 10-12µm | 30% | air | oui |
| Ex4 | Tiflex | 10-12µm | 40% | air | oui |
| Exemple comparatif | - | - | - | - | non |

## Revendications

1. Procédé pour rendre apte au débordage un verre comportant un revêtement de surface hydrophobe et/ou oléophobe, **caractérisé en ce que** l'on dépose à la surface dudit verre une couche protectrice temporaire conférant au verre une énergie de surface au moins égale à 15 mJ/m².

2. Procédé selon la revendication 1, **caractérisé en ce que**, avant le dépôt de la couche protectrice, le verre comportant un revêtement de surface hydrophobe et/ou oléophobe présente une énergie de surface initiale inférieure ou égale à 14 mJ/m².

3. Procédé selon la revendication 3, **caractérisé en ce que** l'énergie de surface initiale est inférieure ou égale à 12 mJ/m².

4. Procédé selon l'une quelconque des revendications précédentes, **caractérisé en ce que** la couche protectrice est déposée sur une zone couvrant la totalité d'au moins une des deux faces dudit verre.

5. Procédé selon l'une quelconque des revendications 1 à 3, **caractérisé en ce que** la couche protectrice est déposée uniquement sur une zone destinée à recevoir le contact d'un patin de maintien dudit verre.

6. Procédé selon l'une quelconque des revendications précédentes, **caractérisé en ce que** la couche protectrice présente une structure continue.

7. Procédé selon l'une quelconque des revendications 1 à 5, **caractérisé en ce que** ladite couche protectrice présente une structure discontinue.

8. Procédé selon la revendication 7, **caractérisé en ce que** la couche protectrice se présente sous la forme d'une trame.

9. Procédé selon l'une quelconque des revendication précédentes, **caractérisé en ce que** la couche protectrice est une couche minérale.

10. Procédé selon la revendication 9, **caractérisé en ce que** la couche protectrice comprend un ou plusieurs fluorures métalliques ou un ou plusieurs oxydes métalliques.

11. Procédé selon la revendication 10, **caractérisé en ce que** le fluorure est MgF₂, LaF₃, AlF₃ ou CeF₃.

12. Procédé selon la revendication 10, **caractérisé en ce que** l'oxyde est choisi parmi les oxydes de titane, d'aluminium ou de zirconium.

13. Procédé selon l'une quelconque des revendications 9 à 12 **caractérisé en ce que** la couche protectrice est déposée par évaporation.

14. Procédé selon l'une quelconque des revendications 9 à 12, **caractérisé en ce que** la couche protectrice a une épaisseur inférieure ou égale à 50 nm.

15. Procédé selon la revendication 14, **caractérisé en ce que** la couche protectrice a une épaisseur variant de 1 à 50 nm.

16. Procédé selon la revendication 14, **caractérisé en ce que** la couche protectrice a une épaisseur variant de 5 à 50 nm.

17. Procédé selon l'une quelconque des revendications 1 à 8, **caractérisé en ce que** la couche protectrice est constituée d'une encre de marquage pour verre ophtalmique et/ou du polymère constituant le liant de celle-ci.

18. Procédé selon la revendication 17, **caractérisé en ce que** la couche protectrice a une épaisseur d'au moins 5 micromètres.

19. Procédé selon l'une quelconque des revendications précédentes, **caractérisé en ce que** le revêtement de surface hydrophobe et/ou oléophobe comprend un silane porteur de groupements fluorés.

20. Procédé selon l'une quelconque des revendications précédentes, **caractérisé en ce que** le revêtement de surface hydrophobe et/ou oléophobe a une épaisseur inférieure à 10 nm.

21. Procédé selon l'une quelconque des revendications précédentes, **caractérisé en ce que** le verre comprend un revêtement anti-reflets sur lequel le revêtement hydrophobe et/ou oléophobe est déposé.

22. Procédé selon la revendication 21, **caractérisé en ce que** le revêtement anti-reflets est constitué d'une matière minérale.

23. Procédé selon la revendication 21, **caractérisé en ce que** le revêtement anti-reflets comporte plusieurs couches.

24. Procédé selon l'une quelconque des revendications 21 à 23, **caractérisé en ce que** le revêtement anti-reflets est déposé par évaporation.

25. Verre apte au débordage, **caractérisé en ce qu'**il comprend un revêtement hydrophobe et/ou oléophobe sur lequel est déposé une couche protectrice temporaire conférant au verre une énergie de surface au moins égale à 15 mJ/m².

26. Procédé d'obtention d'un verre débordé à propriété de surface hydrophobe et/ou oléophobe, **caractérisé en ce qu'**il comprend les étapes suivantes :
1) on choisit un verre tel que défini selon la revendication 25,
2) on procède au glantage dudit verre,
3) on déborde ledit verre,
4) on procède au déglantage dudit verre,
5) on récupère le verre ainsi débordé, et
6) on élimine la couche protectrice temporaire pour restituer au verre ses propriétés de surface hydrophobe et/ou oléophobe.

27. Procédé selon la revendication 26, **caractérisé en ce que** l'étape d'élimination de la couche protectrice temporaire comprend une étape de traitement du verre récupéré lors de l'étape 5 par une solution acide.

28. Procédé selon la revendication 27, **caractérisé en ce que** la solution acide est une solution d'acide orthophosphorique.

29. Procédé selon la revendication 26, **caractérisé en ce que** l'étape d'élimination de la couche protectrice temporaire comprend une étape d'essuyage à sec.

30. Procédé selon l'une quelconque des revendications 26 à 29, **caractérisé en ce que** l'étape d'élimination comprend également l'application d'ultrasons.

31. Procédé selon l'une quelconque des revendications 26 à 30, **caractérisé en ce que** l'étape d'élimination de la couche protectrice temporaire comprend en outre une étape de nettoyage par une solution aqueuse de pH sensiblement égal à 7.

## Claims

1. Method to enable trimming of an ophthalmic glass comprising a hydrophobic and/or oil-repellent surface coating, **characterised in that** a a temporary protective layer providing to the ophthalmic glass a surface energy at least equal to 15 mg/m2 is coated on the surface of said glass:

2. Method according to claim 1, **characterised in that** before coating the protective layer, the ophtalmic glass comprising a hydrophobic and/or oil-repellent surface coating has an initial surface energy less than or equal to 14 mJ/m².

3. Method according to claim 3, **characterised in that** the initial surface energy is less than or equal to 12 mJ/m².

4. Method according to anyone of the previous claims, **characterised in that** the protective layer is coated only on an area convening all of at least one of the two faces of said ophthalmic glass.

5. Method according to anyone of claims 1 to 3, **characterised in that** the protective layer is coated only on an area provided to receive the contact of a holding pad of said glass.

6. Method according to anyone of the previous claims, **characterised in that** the protective layer has a continuous structure.

7. Method according to anyone of claims 1 to 5, **characterised in that** the protective layer has a discontinous structure.

8. Method according to claim 7, **characterised in that** the protective layer is screen-shaped.

9. Method according to anyone of the previous claims, **characterised in that** the protective layer is a mineral layer.

10. Method according to claim 9, **characterised in that** the protective layer comprises one or more metal fluorides or one or more metal oxides.

11. Method according to claim 10, **characterised in that** the fluoride is MgF₂, LaF₃, AlF₃ or CeF₃.

12. Method according to claim 10, **characterised in that** the metal oxide is selected from the group consisting of titania, alumina or zirconia.

13. Method according to anyone of claims 9 to 12, **characterised in that** the protective layer is coated by evaporation.

14. Method according to anyone of claims 9 to 12, **characterised in that** the protective layer has a thickness less than or equal to 50 nm.

15. Method according to claim 14, **characterised in that** the protective layer has a thickness ranging from 1 to 50 nm.

16. Method according to claim 14, **characterised in that** the protective layer has a thickness ranging from 5 to 50 nm.

17. Method according to anyone of claims 1 to 8, **characterised in that** the protective layer is made of a marking ?? for ophthalmic glass and/or of polymer comprising the binder thereof.

18. Method according to claim 17, **characterised in that** the protective layer has a thickness of at least 5 micrometers.

19. Method according to anyone of the previous claims, **characterised in that** the hydrophobic and/or oil-reppelent surface coating comprises or silane with fluorimated groups.

20. Method according to anyone of the previous claims, **characterised in that** the hydrophobic and/or oil-reppelent surface coating has a thickness less then 10 nm.

21. Method according to anyone of the previous claims, **characterised in that** the ophthalmic glass comprises an anti-reflection coating on which the hydrophobic and/or oil-reppelent coating is coated.

22. Method according to claim 21, **characterised in that** the anti-reflection is made of a mineral material.

23. Method according to claim 21, **characterised in that** the anti-reflection coating comprises several layers.

24. Method according to anyone of claims 21 to 23, **characterised in that** the anti-reflection coating is coated by evaporation.

25. Ophthalmic glass able to triming, **characterised in that** it comprises a hydrophobic and/or oil-reppelent coating on which is coated a temporary protective layer providing to the ophthalmic glass a surface energy at least equel to 15 mg/m².

26. Method of making a trimmed ophthalmic glass having hydrophobic and/or oil-reppelent surface properties, **characterised in that** it comprises the following steps :
1) choasing and ophthalmic glass as defined in claim 25;
2) treating said ophthalmic glass
3) trimming said ophthalmic glass
4) retreating said ophthalmic glass
5) recovering said ophthalmic glass the trimed, and
6) removing the temporary protective layer so as to restore the glass in into hydrophobic and/or oil-reppelent surface properties.

27. Method according to claim 26, **characterised in that** the removing step of the temporary protective layer comprises a treatment step of the glass obtained in step 5 by a acid solution.

28. Method according to claim 27, **characterised in that** the acid solution in an ophthalmic acid solution.

29. Method according to claim 26, **characterised in that** the removing step of the temporary protective layer comprises a dry wiping step.

30. Method according to anyone of claims 26 to 29, **characterised in that** the removing step also comprises the application of ultrasonic waves.

31. Method according to anyone of claims 26 to 30, **characterised in that** the removing step of the temporary protective layer comprises moreover a cleaming step with an aqueous solution having a n-H substantially equal to 7.

## Patentansprüche

1. Verfahren um ein Glas mit einem hydrophoben und/oder oleophoben Flächenüberzug beschneidbar zu gestalten, **dadurch gekennzeichnet, dass** man eine temporäre Schutzschicht auf die Fläche des Glases aufbringt, dem Glas eine Flächenenergie verleihend von zumindest gleich 15 mJ/m².

2. Verfahren nach Anspruch 1, **dadurch gekennzeichnet, dass** vor dem Aufbringen der Schutzschicht das Glas mit hydrophoben und/oder oleophoben Flächenüberzug eine anfängliche Flächenenergie zeigt von weniger oder gleich 14 mJ/m².

3. Verfahren nach Anspruch 2, **dadurch gekennzeichnet, dass** die anfängliche Flächenenergie kleiner oder gleich ist als 12 mJ/m².

4. Verfahren nach einem der vorangegangenen Ansprüche, **dadurch gekennzeichnet, dass** die Schutzschicht aufgebracht ist an einer Zone, die die Gesamtheit von zumindest einer der zwei Seiten des Glases abdeckt.

5. Verfahren nach einem der Ansprüche 1 bis 3, **dadurch gekennzeichnet, dass** die Schutzschicht aufgebracht ist ausschließlich auf eine Zone, die dazu bestimmt ist, in Berührung zu treten mit einem Halteschuh für das Glas.

6. Verfahren nach einem der vorangegangenen Ansprüche, **dadurch gekennzeichnet, dass** die Schutzschicht eine kontinuierliche Struktur zeigt.

7. Verfahren nach einem der Ansprüche 1 bis 5, **dadurch gekennzeichnet, dass** die Schutzschicht eine diskontinuierliche Struktur zeigt.

8. Verfahren nach Anspruch 7, **dadurch gekennzeichnet, dass** die Schutzschicht rasterartig vorliegt.

9. Verfahren nach einem der vorangegangenen Ansprüche, **dadurch gekennzeichnet, dass** die Schutzschicht eine mineralische Schicht ist.

10. Verfahren nach Anspruch 9, **dadurch gekennzeichnet, dass** die Schutzschicht eine oder mehrere metallische Fluorverbindungen oder ein oder mehrere metallische Oxyde umfasst.

11. Verfahren nach Anspruch 10, **dadurch gekennzeichnet, dass** die Fluorverbindung MgF₂, LaF₃, AlF₃ oder CeF₃ ist.

12. Verfahren nach Anspruch 10, **dadurch gekennzeichnet, dass** das Oxyd ausgewählt ist aus Titanoxyd, Aluminiumoxyd und Zirkonoxyd.

13. Verfahren nach einem der Ansprüche 9 bis 12, **dadurch gekennzeichnet, dass** die Schutzschicht mittels Verdampfung aufgebracht ist.

14. Verfahren nach einem der Ansprüche 9 bis 12, **dadurch gekennzeichnet, dass** die Schutzschicht eine Dicke zeigt von weniger oder gleich als 50 nm.

15. Verfahren nach Anspruch 14, **dadurch gekennzeichnet, dass** die Schutzschicht eine Dicke variierend von 1 bis 50 nm hat.

16. Verfahren nach Anspruch 14, **dadurch gekennzeichnet, dass** die Schutzschicht eine Dicke variierend von 5 bis 50 nm hat.

17. Verfahren nach einem der Ansprüche 1 bis 8, **dadurch gekennzeichnet, dass** die Schutzschicht gebildet ist aus einer Markierungstinte für ophtalmische Gläser und/oder aus dem Polymer das diesbezügliche Bindemittel darstellend.

18. Verfahren nach Anspruch 17, **dadurch gekennzeichnet, dass** die Schutzschicht eine Dicke von zumindest 5 Mikrometer hat.

19. Verfahren nach einem der vorangegangenen Ansprüche, **dadurch gekennzeichnet, dass** der hydrophobe und/oder oleophobe Flächenüberzug ein Silan, Träger von fluorierten Gruppen, umfasst.

20. Verfahren nach einem der vorangegangenen Ansprüche, **dadurch gekennzeichnet, dass** der hydrophobe und/oder oleophobe Flächenüberzug eine Dicke von weniger als 10 nm hat.

21. Verfahren nach einem der vorangegangenen Ansprüche, **dadurch gekennzeichnet, dass** das Glas eine Antireflexbeschichtung umfasst, an welchem der hydrophobe und/oder oleophobe Überzeug aufgebracht ist.

22. Verfahren nach Anspruch 21, **dadurch gekennzeichnet, dass** die Antireflexbeschichtung aus einem mineralischen Material gebildet ist.

23. Verfahren nach Anspruch 21, **dadurch gekennzeichnet, dass** der Antireflexüberzug mehrere Schichten umfasst.

24. Verfahren nach einem der Ansprüche 21 bis 23, **dadurch gekennzeichnet, dass** die Antireflexbeschichtung mittels Verdampfung aufgebracht ist.

25. Schneidbares Glas, **dadurch gekennzeichnet, dass** es einen hydrophoben und/oder oleophoben Überzug umfasst, an welchem eine temporäre Schutzschicht aufgebracht ist, dem Glas eine Flächenenergie von zumindest gleich als 15mJ/m² verleihend.

26. Verfahren zum Erhalten eines beschnittenen Glases mit hydrophoben und/oder oleophoben Flächeneigenschaften, **dadurch gekennzeichnet, dass** es die folgenden Schritte umfasst:
1) Auswählen eines Glases, wie im Anspruch 25 definiert,
2) Anbringen einer Halterung an dem Glas,
3) Beschneiden des Glases,
4) Entfernen der Halterung von dem Glas,
5) Aufnehmen des so beschnittenen Glases,
6) Eliminieren der temporären Schutzschicht, um dem Glas erneut die hydrophoben und/oder oleophoben Flächeneigenschaften zu verleihen.

27. Verfahren nach Anspruch 26, **dadurch gekennzeichnet, dass** der Schritt des Eliminierens der temporären Schutzschicht einen Schritt der Behandlung des während dem Schritt 5 aufgenommenen Glases mittels einer sauren Lösung umfasst.

28. Verfahren nach Anspruch 27, **dadurch gekennzeichnet, dass** die saure Lösung eine Orthophosphorlösung ist.

29. Verfahren nach Anspruch 26, **dadurch gekennzeichnet, dass** der Schritt des Eliminierens der temporären Schutzschicht einen Schritt der Trockenreinigung umfasst.

30. Verfahren nach einem der Ansprüche 26 bis 29, **dadurch gekennzeichnet, dass** der Schritt des Eliminierens ferner die Anwendung von Ultraschall umfasst.

31. Verfahren nach einem der Ansprüche 26 bis 30, **dadurch gekennzeichnet, dass** der Schritt des Eliminierens der temporären Schutzschicht weiterhin einen Schritt des Reinigens mit einer wässrigen Lösung mit einem pH-Wert von im wesentlichen gleich zu 7 umfasst.
